# EUROPEAN PATENT APPLICATION

(11) **EP 1 564 679 A2**
(43) Date of publication of application: **17.08.2005**
(21) Application number: 05002540.2
(22) Date of filing: 07.02.2005
(51) Int. Cl.: G06K 19/077, G06K 7/00, H04Q 7/00, H04M 1/00, G06F 13/00

(54) **Data access in a short-range wireless communication network**

(30) Priority: 10.02.2004 US 775450
(71) Applicant: Nokia Corporation, 02150 Espoo (FI)
(72) Inventor: Nystrom, Sebastian, 02750 Espoo (FI)
(74) Representative: Becker Kurig Straus

(57) **Abstract**

A short-range communication system (100), including a transponder (200) and mobile reader device (300) that seamlessly integrates information stored on the tag with information stored at an external network resource. The system, devices, methods and computer programs are capable of providing a user with access to information and services stored locally on the tag and remotely at a network resource without incurring an unnecessary delay between the presentation of the information stored on the tag and the information stored remotely. In addition, the system, devices, methods and computer programs may provide for dual mode access to information, whereby information stored on the tag is accessed freely, while information on the remote network resource requires some form of authorization.

## Description

### FIELD OF THE INVENTION

This invention relates to the accessing data in a short-range communication network, and more particularly, relates to providing short-range transponders, such as radio-frequency identification (RFID) tags, the ability to simultaneously communicate information stored at the transponder and information related to accessing further related information.

### BACKGROUND OF THE INVENTION

Short-range wireless communication capability is becoming more prominent in a wide variety of mobile digital devices, such as cellular phones, personal digital assistants, pagers and other mobile devices. By equipping such devices with requisite short-range communication readers the devices have the ability to communicate via RFID, Bluetooth, infrared or other types of short-range communication dependent upon the type of reader/transceiver associated with the mobile device. Devices equipped with such readers are capable of receiving information from transponders, also referred as tags. As more and more portable digital devices become equipped with short-range wireless communication means, such as RFID and the like, the device's ability to access information and services expands.

Short-range communication tags are typically simplistic in design; including an integrated circuit that incorporates the associated short-range communication circuitry and sufficient memory to store the information that will be communicated to the transponder. As such, tags are typically contained within relatively compact packages, such as embedded within a credit-card type package, a key fob or the like. The compact nature of the tags makes them highly portable and adaptable to many different applications. However, the compact nature of the tag tends to limit the size of the memory unit and, thus, the amount of information that can be stored and transmitted by the tag is limited. Typically, current tags are limited to a memory size in the range of about 32 bytes to about 128 bytes of storage space. However, it is noted that next-generation tags may have upwards of 1000 - 3000 kilobytes or more of storage capacity. In addition to physical constraints, tags are typically high-volume, low cost devices that are generally disposable. Thus, even though the physical size of the tag may allow for additional memory space, the cost related to adding additional memory is typically economically prohibitive.

The limited amount of storage capability provided by short-range communication tags impedes the user's ability to access information and services. For example, a tag may contain information equivalent to a start page or a home page, i.e., an index or table of contents to other information stored at a site. However, the limited memory included within a tag would prohibit the indexed information from being locally stored on the tag. In another example, a tag may contain a preview of a multimedia file, such as an audio file, an image file or a video file, however; storage capacity would prohibit the tag from including the entire multimedia file.

As a means of attempting to overcome the storage shortfalls of the short-range communication tags and to provide users with access to additional information, larger files or services, tags have recently included hyperlinked Universal Resource Locators (URLs) or some other form of network resource identifier. In application, tags that include URLs or IDs function in the following manner. A transceiver-equipped device activates a tag and the tag responds with the information stored locally on the tag. In this application, the information stored on the tag is an embedded URL or some other form of network resource identifier. The device user, presented with a URL, can choose to activate the URL, which typically launches a web browser application and requires the device to initiate a network connection to the associated network resource. While use of URLs or other forms of IDs provide the user the ability to access additional information, the user will typically experience a delay, associated with launching applications and connecting with a network resource, prior to accessing or interfacing with the requisite information or service. Such delays inhibit the overall user experience and in many instances may provide the impetus for the user choosing not to access the information or service.

Thus, the need exists to develop a short-range communication system, including a tag and a mobile reader device that seamlessly integrates information stored on the tag with information stored at an external network resource. The desired system, device and method should be capable of providing a user with access to information and services stored locally on the tag and remotely at a network resource without incurring an unnecessary delay between the presentation of the information stored on the tag and the information stored remotely. Additionally, the desired system, device and method should characteristically limit the amount of information stored on the short-range communication tag, thereby, limiting the memory capacity required of the tag, the physical size of the tag and the cost of the tag. Further, a need exists to provide for a system whereby information stored on the tag is generally static in nature while remotely accessed information can be dynamically accessed and updated, as required by the application. In addition, the desired system, device and method should provide for dual mode access to information, whereby information stored on the tag is accessed freely, while information on the remote network resource requires some form of authorization.

### BRIEF SUMMARY OF THE INVENTION

The present invention provides seamless integration of information stored on a short-range communication tag with information stored remotely at a network resource. As such, the user of a reader-associated device can access information stored on a short-range communication tag and information stored remotely at a network resource without incurring unnecessary delay. The present invention provides for short-range communication tags that store both local content information and commands for effecting retrieval of information or services at a remote network resource. As such, when the reader-associated device contacts the tag, both the locally stored information and the commands for effecting access to information and/or services at the remote network device are communicated to the device. Thus the user of the reader-associated device can access the information locally stored on the tag while the device is simultaneously establishing the network link with the remote network resource and, in some instances, communicating additional information and/or services from the remote network resource to the device. In this regard, the user of the reader-associated device can seamlessly access the information stored on the tag and, without delay, access the associated information stored on the remote network resource.

One embodiment of the invention is defined by a short-range wireless communication transponder device. The device includes short-range wireless communication circuitry and a memory unit in communication with the circuitry, wherein the memory unit stores local content information and commands for concurrently effecting retrieval of supplemental content information associated with the local content information from a remote network resource while the local content information is accessible to a remote wireless device. In a typical embodiment the transponder, also referred to as a tag, will be defined as a Radio Frequency Identification (RFID) transponder and the short-range wireless communication circuitry is defined as RFID circuitry.

The information that is stored locally at the transponder may include an Internet home page or start page; i.e. a page of information that provides a table of contents to further information. In such embodiments, the memory unit will also store commands for effecting retrieval of supplemental content information associated with the Internet home page, i.e., the underlying contents provided for in the Internet home page.

Additionally, the locally stored information may include a portion of a multimedia file, such as an audio file, an image file or a video file. Typically the memory unit of the transponder will be limited in storage capacity, such that, only a small portion of a multimedia file can be stored locally at the transponder. In such embodiments, the memory unit will also store commands for effecting retrieval of supplemental content information including a second portion of the multimedia file. The second portion may include the full multimedia file or the remaining portion that is not stored locally at the transponder. In a similar fashion, the locally stored information may include a portion of a questionnaire, such as user feedback form, survey or the like. In such embodiments, the memory unit will also store commands for effecting retrieval of supplemental content information including a second portion of the questionnaire. The second portion may include the full questionnaire or the remaining portion that is not stored locally at the transponder.

In another embodiment of the transponder the memory unit will store local content information that includes a condensed version of a file. For example, the memory unit may store a thumbnail depiction of an image file or a condensed version of a text file. In such embodiments, the memory unit will also store commands for effecting retrieval of supplemental content information including a full version of the file.

The invention is also defined by a mobile device that provides for short-range wireless communication, typically RFID communication. In this regard, the mobile device is capable of reading or wirelessly interrogating transponders that are in the general vicinity of the mobile device. The mobile device may be, but is not limited to, a cellular telephone, a personal digital assistant or the like. The mobile device will include a reader for receiving and decoding short-range wireless communication signals from an associated transponder. The decoded information will include information locally stored on the transponder and commands for concurrently retrieving supplemental content information associated with the locally stored information from a remote network resource while the local content information is accessible on the mobile device. The mobile device will additionally include a processor in communication with the reader that receives the decoded information is capable of executing instructions for making information locally stored at the transponder accessible to the mobile device user and concurrently effecting retrieval of the supplemental content information from the network resource. Effecting retrieval of the supplemental content information will typically involve establishing wireless communication, such as cellular, Wireless Local Area Network (WLAN), Ultra Wide Band (UWB) or the like, with the remote network resource.

The decoded information that is decoded by the reader includes information locally stored at the transponder. This information may include an Internet home page, a portion of a multimedia file, a portion of a questionnaire, a condensed version of a file or any other suitable information. In such embodiments, the decoded information will include commands for concurrently retrieving supplemental content information from a network resource while the Internet home page, a portion of a multimedia file, a portion of a questionnaire, a condensed version of a file or any other suitable information is accessible to the user of the mobile device. This supplemental content information may include information associated with the Internet home page, the remaining or full portion of the multimedia file, the remaining or full portion of the questionnaire and the full version of the file.

Additionally, the invention is embodied in a system for short-range wireless communication. The system includes a transponder device that stores and transmits both local content information and commands for effecting retrieval of supplemental content information from a network resource. The supplemental content information is characteristically associated with the local content information. The system additionally includes a mobile device that includes a reader that decodes information received from the transponder and a processor that provides for user-access to the local content information while concurrently initiating wireless communication with the network resource for the purpose of retrieving the supplemental content information.

Further, the invention is embodied in a method for wirelessly providing information to a mobile device. The method includes the steps of storing, at a transponder, local content information and commands for concurrently effecting retrieval of supplemental content information stored at a remote network resource while the local content information is accessible to the user of the mobile device. The method further includes the steps of wirelessly transmitting, from the transponder to a mobile device equipped with a reader, the local content information and the commands for concurrently effecting retrieval of supplemental content information from a remote network resource while the local content information is accessible to the user of the mobile device. Additionally, the method includes the steps of providing a user of the mobile device access to the local content information and concurrently effecting retrieval of the supplemental content information stored at the remote network resource based on the commands in the transponder transmission. The step of effecting retrieval of the supplemental content information stored at the remote network resource may occur absent user input by the mobile device user. Alternatively, this step may occur upon authorization of the mobile device user.

In one embodiment of the method, the step of providing a user of the mobile device access to the local content information occurs complimentary without authorization or payment of a fee, while the step of effecting retrieval of the supplemental content information stored at the remote network resource occurs after the user has been authorized and/or a payment of fee has been made.

The invention is also defined by an embodiment of a computer program product for providing a user of a mobile device access to information stored locally on a transponder and concurrently effecting retrieval of supplemental content information stored at a remote network resource while the local content information is accessible to the user of the mobile device. The computer program product includes a computer-readable storage medium having computer-readable program code portions stored therein. The computer-readable program code includes a first executable portion capable of providing a mobile device user access to information stored locally on a transponder and received via a wireless interrogation by the mobile device. The computer readable program code additionally includes a second executable portion capable of effecting retrieval of supplemental content information stored at a remote network resource based on commands received by the mobile device via the interrogation.

The computer program product the first executable portion and the second executable portion are performed concurrently such that the mobile device user is provided access to the information stored locally on the transponder while the mobile device is effecting retrieval of supplemental content information from the network resource. In one specific embodiment, effecting retrieval of the supplemental content information stored at the remote network resource occurs upon authorization of the mobile device user. In another specific embodiment, the first executable portion is capable of providing a mobile device user complimentary access to information stored locally on a RFID transponder and received via an interrogation by the mobile device while the second executable portion is capable of effecting retrieval of supplemental content information stored at a remote network resource upon payment of a fee by the mobile device user.

Thus, the present invention provides for a short-range communication system, including a transponder and a mobile reader device that seamlessly integrates information stored on the tag with information stored at an external network resource. The system, devices and methods are capable of providing a user with access to information and services stored locally on the tag and remotely at a network resource without incurring an unnecessary delay between the presentation of the information stored on the tag and the information stored remotely. Additionally, the system, devices and methods of the present invention characteristically limit the amount of information stored on the tag, thereby, limiting the memory capacity required of the tag, the physical size of the tag and the cost of the tag. Further, the systems, devices and methods of the present invention provide for information stored locally on the tag to be static in nature, while the supplemental content information stored at the network resource is easily accessible and generally dynamic, allowing for the information be provided to the user to be updated or changed as the application dictates. In addition, the system, devices and methods provide for dual mode access to information, whereby information stored on the tag is accessed freely, while information on the remote network resource requires some form of authorization.

### BRIEF DESCRIPTION OF THE DRAWINGS

Having thus described the invention in general terms, reference will now be made to the accompanying drawings, which are not necessarily drawn to scale.
Figure 1 is a block diagram depiction of a system for wirelessly accessing information at mobile device, in accordance with an embodiment of the present invention.
Figure 2 is a block diagram of a short-range wireless transponder, in accordance with one embodiment of the present invention.
Figure 3 is a block diagram of a mobile device equipped with a short-range wireless reader, in accordance with one embodiment of the present invention.
Figure 4 is an illustration of a display of local content information, specifically a table of contents for a book, in accordance with an embodiment of the present invention.
Figure 5 is a flow diagram of a method for accessing information at a mobile device, in accordance with an embodiment of the present invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

The present invention provides seamless integration of information stored on a short-range communication transponder, such as a Radio Frequency Identification (RFID) tag, with supplemental content information stored remotely at a network resource. As such, the user of a reader-associated mobile device, such as cellular telephone or a PDA, can access information stored on a short-range communication tag and information stored remotely at a network resource without incurring unnecessary delay. The present invention provides for short-range communication tags that store both local content information and commands for effecting retrieval of information or services at a remote network resource. As such, when the reader-associated mobile device contacts the tag, both the locally stored information and the commands for effecting access to information and/or services at the remote network device are communicated to the device. Thus the user of the reader-associated device can access the information locally stored on the tag while the device is concurrently establishing the network link with the remote network resource and, in some instances, communicating additional information and/or services from the remote network resource to the device. In this regard, the user of the reader-associated device can seamlessly access the information stored on the tag and, without delay, access the associated information stored on the remote network resource.

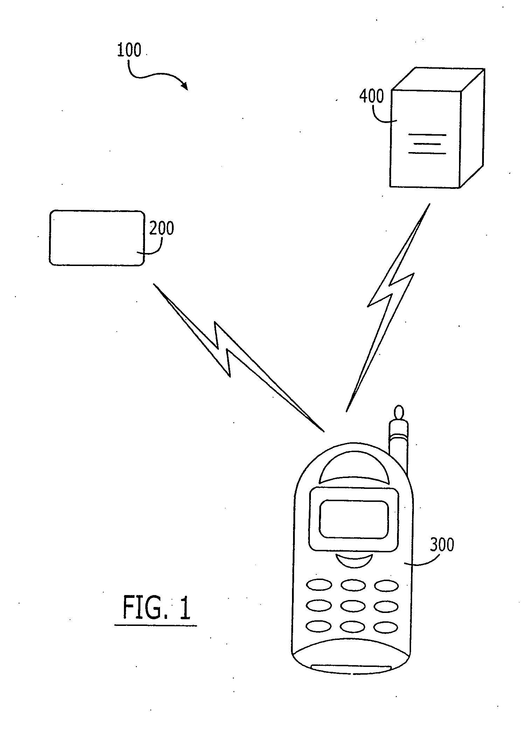

Figure 1 provides a block diagram of a wireless network system for accessing information at a mobile device, in accordance with an embodiment of the present invention. The wireless network system **100** includes a short-range wireless transponder **200,** a mobile device **300** that incorporates a short-range wireless reader or interrogator and a network resource **400** that is in wireless communication with the mobile device.

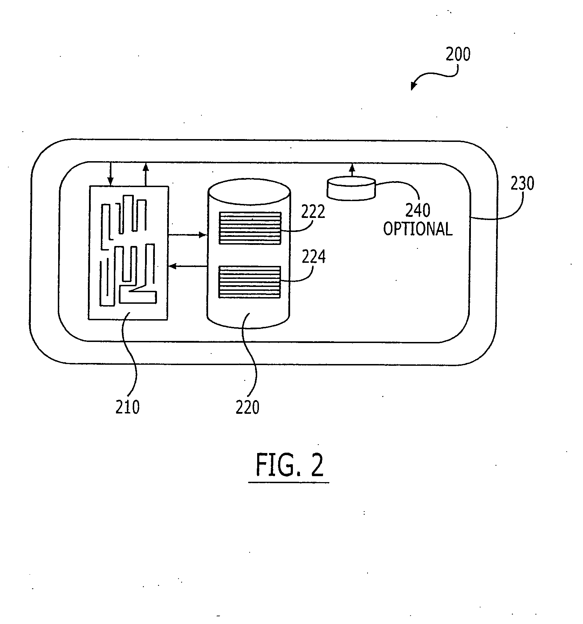

Figure 2 provides a block diagram of the short-range wireless transponder 200, in accordance with an embodiment of the present invention. The short-range wireless transponder, also commonly referred to as a tag, may include an RFID transponder, an Infrared (IR) transponder or any other transponder that supports a specified frequency band suitable for short-range wireless communication. The transponder will include short-range wireless communication circuitry **210** and a memory unit **220** that is in communication with the circuitry. Typically, the short-range wireless communication circuitry and the memory unit will be configured in one unitary integrated circuit. In addition, the transponder will typically include a coupling element or antenna **230** that serves to receive and transmit signals to a corresponding short-range wireless reader. In most applications the transponder will be a passive device that relies on energy transferred from the reader to power the transponder. Typically, passive transponders are preferred so as to provide for low-cost devices. In other instances, the transponder may be an active device that includes an internal power source, such as optional battery **240.** The active and passive transponders differ in the range of allowable data transmission. Typically, the passive transponder is limited to operation in the range of about 3 meters, while the active transponder may operate up to about 100 meters depending upon the strength of the internal power source. It is noted that in certain applications, short-range operation of the transponder, in about the 10 centimeter range, is preferred.

The memory unit of the transponder is typically limited in storage capacity. In most passive transponder embodiments, the memory unit will provide for storage capacity in the range of about 32 bytes to about 128 bytes. Additionally, recent innovations have provided for ''smart cards" that are characterized by memory in the range of about 1000 kilobytes to about 5000 kilobytes. As such the transponder is limited in the amount of information that it can transmit to corresponding readers. In order to address the problems related to limited memory storage and limited data transmission, the present invention provides for a memory unit that stores two distinct and identifiable portions of information. The first portion **222** is information stored locally at the transponder, also referred to herein as the local content information. This is the information that would typically be stored on a conventional transponder. In addition to the first portion, the memory unit will store a second portion **224** that includes commands for wirelessly retrieving supplemental content information from a network resource, such as a back-end server or some other form of network storage device. The supplemental content information will typically be information that is associated with the local content information to ensure a close integration of the local content information and the supplemental content information from the network resource. Thus, when a short-range wireless reader interrogates the transponder, the transponder will respond by communicating both the information locally stored at the transponder (i.e., the first portion) and the commands for wirelessly retrieving supplemental content information from a network resource (i.e., the second portion), which enables concurrent handling of the entire tag information by the short-range wireless reader device including providing the local content information for use by the short-range wireless reader and simultaneous effecting of the retrieval of supplemental content information from the network resource.

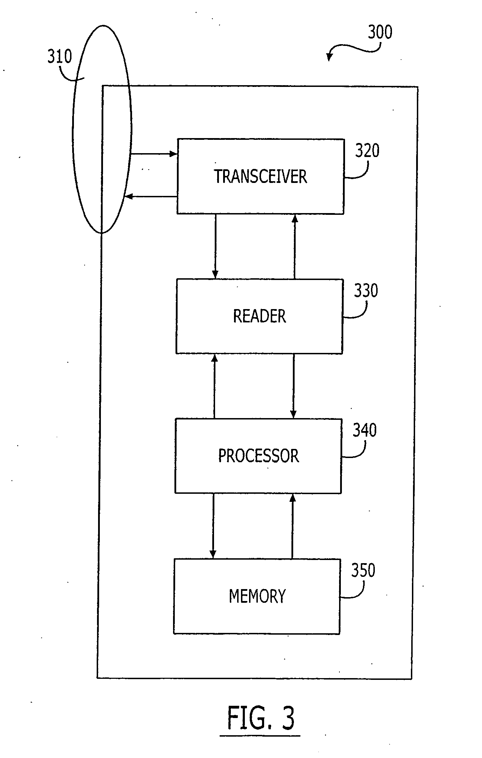

Figure 3 is a block diagram of a mobile device **300** that incorporates a short-range wireless reader, also referred to as an interrogator, in accordance with an embodiment of the present invention. The mobile device may be a cellular telephone, a PDA, a portable computing device, a digital camera or any other form of a mobile device. The mobile device will include antennae **310** for receiving and transmitting digital signals. In embodiments in which the reader is an RFID reader, the antennae will receive and transmit signals in the radio frequency range of wireless communication. Additionally, the mobile device will include a transceiver module **320** that is in communication with the antennae and provides demodulation of the signals received by the antennae and modulation of the signals that will be transmitted by the antennae. The mobile device will also include a reader **330** that is in communication with the transceiver module and performs decoding, i.e., logical interpretation, of the demodulated signal received from the transceiver. The reader is in communication with a processor **340** that generally operates under the control of computer program instructions stored in an associated memory device **350** in order to execute the instructions rendered from the logical interpretation of the signal by the reader.

Additionally, the mobile device **300** will typically include a User Interface (UI) (not shown in Figure 3), such as a keypad, joystick/mouse or some other means for enabling user input. In addition, the mobile device may include a display (not shown in Figure 3) and/or audio output means (not shown in Figure 3) to provide audible information to the device user.

In the present invention, the reader is responsible for decoding, i.e., logically interpreting, the information transmitted from a corresponding transponder. This information includes decoding a first portion that includes information locally stored on the transponder and decoding a second portion that includes commands for effecting retrieval, from a network resource, of supplemental content information associated with the locally stored information. In this same regard, the processor is responsible for executing the instructions of the reader. In the present invention, the processor is responsible for executing instructions for making information locally stored at the transponder accessible to the mobile device user and effecting retrieval of the supplemental content information from the network resource. In specific embodiments of the invention, making information locally stored at the transponder accessible to the mobile device user may include displaying the information on an associated mobile device display, providing for a sound platform for an audible presentation of the local content information or any other suitable means of providing user-accessibility to the local content information may be provided. Effecting retrieval of the supplemental content information will typically include establishing a wireless communication link with the network resource and downloading the supplemental content information from the network resource to the mobile device. The wireless communication link may be any form of wireless communication suitable to the mobile device and the network resource. For example, the wireless communication may be via cellular, Bluetooth® (i.e., transmission within the 2,400 MHz to about 2,500 MHz range), Wireless Local Area Network (WLAN), Ultra Wide Band (UWB) or any other suitable form of wireless communication.

The system of the present of the invention may have applications in the following instances in which the local content information stored and transmitted from the transponder includes a portion of the information sought by the user of the mobile device and the supplemental content information stored and transmitted from the network resource includes either the remainder of the information sought by the user of the mobile device or the information in its entirety. For example, in one embodiment the local content information may include an Internet-type home page or start page, i.e., a page containing a table of contents or other reference to related information. In such an embodiment, the supplemental content information stored by the network resource may include information referenced by the home page or start page, i.e., supplemental Web pages or the like. In application, while the user of the mobile device is presented access to the home page or start page, the mobile device is concurrently launching requisite applications, such as a browser application, establishing a wireless connection with the network resource and downloading the information referenced by the home page or start page from the network resource. As such, when the user selects related information from the home page or start page, the information is provided to the user with minimal or no delay.

In the described application, the local content information stored on the transponder is static information and, thus, the local content information provided to the mobile terminal is not readily updateable. However, the supplemental content information stored at the network resource is generally accessible and can updated on an as-needed basis. Thus, if the home page has a link for timely news related information, the supplemental content information that is associated with the link can updated to reflect current news related information. As such, the present invention may prolong the life of the transponder, in that, information provided by the transponder may be dynamic in nature.

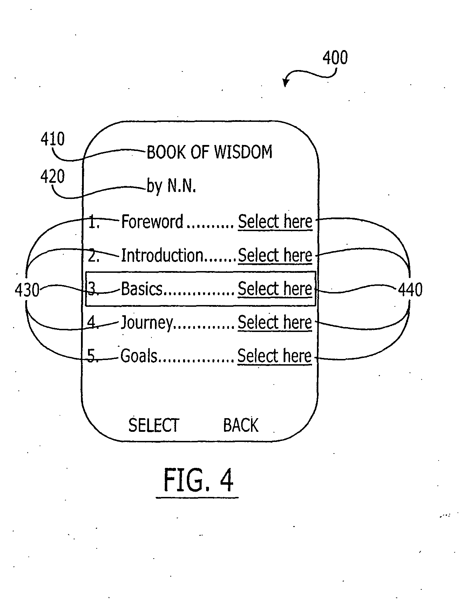

Similar to the embodiment in which the local content information includes an Internet-type home page or start page, another application embodiment of the present invention provides for the transponder to store the table of contents for a book, an audio CD, a video and for the book chapters, CD tracks or the like to be stored as the supplemental content information at the network resource. Figure 4 provides an example of the user interface on a display of a mobile terminal that has received a book table of contents from a transponder, in accordance with an embodiment of the present invention. The user interface **400** displays information that was stored locally on the transponder. The local content information includes the book title **410,** the author **420,** book chapters **430** and book chapter links **440.** The local content information has been conveyed to the mobile terminal along with instructions for effecting the retrieval of the supplemental content information, i.e., the book chapters. Thus, while the user of the mobile terminal is accessing the local content information via the display, in the background the mobile device is launching requisite applications, establishing a wireless connection with the network resource and downloading the book chapters from the network resource. In this regard, if the user of the mobile terminal chooses to access a chapter of the book, by activating the associated book chapter link **440,** the book chapters will be displayed instantaneously, without occurring delay that would typically be related to contacting the network resource and downloading the book chapters after the link is activated. It is also noted that access to such multimedia files as books, audio CDs, videos or the like, may require authorization in the form of a payment prior to accessing.

As previously noted, while the transponder typically includes static local content information, the supplemental content information is generally dynamic and be updated and changed as the application warrants. Thus, transponders can be deployed prior to any or all of the supplemental content information being in existence. For example, a transponder may be deployed with a book table of contents or a CD track listing, prior to the book being published or prior to the CD being released. While certain types of "tease" information may be accessed upon deployment of the transponder, the actual book contents or CD tracks would not be available until the publication or release date.

In yet another example, the local content information may include a first portion of a multimedia file, such as an audio file, an image file or a video file. Thus, the user of the mobile device is provided with a first portion of the multimedia file, i.e. a preview or clip, prior to being presented with the remainder of the file or the file in its entirety. The supplemental content information stored at the network resource will include the remainder of the multimedia file or the file in its entirety. In such embodiments, the user of the mobile device may be required to provide authorization, typically in the form of a payment, prior to accessing the supplemental content information stored on the network resource. It should be noted that in those embodiments of the invention that require authorization to access the supplemental content information, authorization does not necessarily trigger the initiation of retrieval of the supplemental content information. The initiation of the retrieval, i.e., establishing wireless communication with the network resource and beginning or accomplishing the download of the supplemental content information, may advantageously occur in the background while the user has access to the local content information. As such, the user of the mobile device experiences minimal delay between the period from which they are authorized to access the remainder or entirety of the file and the time at which the remainder or entirety of the file is launched or commences. Alternatively, in certain applications the downloading of information from the network resource to the mobile terminal may not commence until after the mobile terminal user has granted authorization for the download or otherwise paid the requisite fee. In these applications, authorization by the user prior to downloading insures that undesirable information is not downloaded to the mobile terminal without a user's consent.

Similar to the multimedia file example, the invention may provide for an embodiment in which the local content information stored and transmitted from the transponder includes a portion of a questionnaire, survey or feedback form and the supplemental content information stored and transmitted from the network resource includes the remainder of the questionnaire, survey or feedback form. In yet another example, the invention may provide for an embodiment in which the local content information stored and transmitted from the transponder includes a condensed portion of a file, such as a thumbnail representation of an image or video file and the supplemental content information stored and transmitted from the network resource includes the full version of the file. In these embodiments, the user of the mobile device may, in some cases, be required to provide authorization, typically in the form of a payment, prior to accessing the supplemental data.

The applications provided herein are by way of example only and should not be construed as limiting. Many other use case applications are also feasible and are within the inventive concepts herein disclosed.

Access to the supplemental content information stored and transmitted from the network resource will typically be at the bequest of the user of the mobile device. Such configuration will typically be necessary because establishment of the wireless connection and the requisite download time will typically be associated with a service that has a cost associated with it. In other embodiments, it is possible and within the inventive concepts herein considered, to configure access to the supplemental content information as occurring automatically in connection with the access to the local content information stored at the transponder. For example, the local content information stored at the transponder may include the first portion of a file and the supplemental content information stored at the network resource may include the remaining portion of the file. The processor of the mobile device may execute instructions that provides for the first portion of the file to be executed and the remaining portion of the file to be immediately and automatically executed upon completion of the first portion. For example if the file in question is an audio file, immediate sequential execution of the first portion and the remaining portion will result in a cohesive file being presented to the user without interruption or delay between the first and remaining portion. In order to provide for the immediate and automatic execution of the second portion upon completion of the first portion, the processor will execute instructions while the first portion of the file is being accessed and executed to download or otherwise access the second portion based upon the supplemental instructions such that the second portion is readily available upon completion of the first portion.

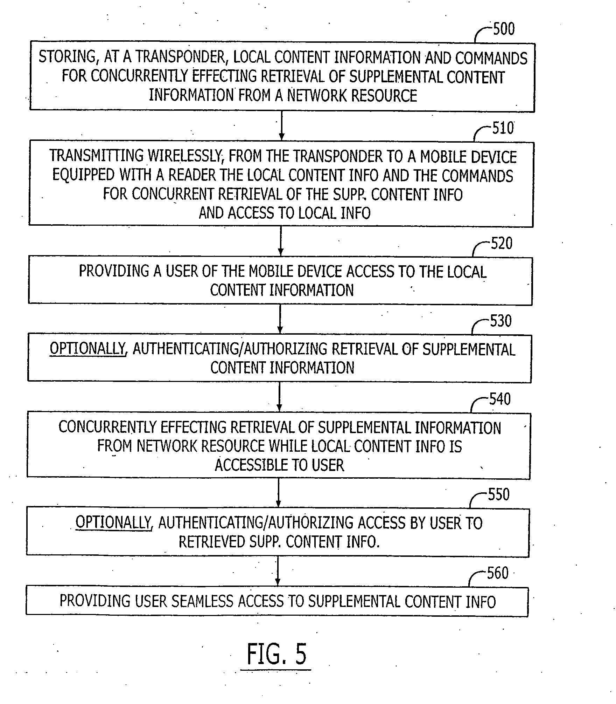

The invention is also defined by a method for providing a mobile device information via wireless communication. Figure 5 depicts a flowchart of the method, in accordance with an embodiment of the present invention. At step 500, the method begins by storing, at a Radio Frequency Identification (RFID) or other wireless transponder, (1) local content information and (2) commands for effecting retrieval of supplemental content information stored at a remote network resource. As previously discussed the local content information may include any conventional information typically stored at a transponder. For example, the local content information may include a home page or start page, a first portion of a multimedia file, a first portion of a questionnaire or survey, a condensed version of a file or the like. The supplemental content information will be associated with the local content information, such that, corresponding to the examples of local content information provided above, the supplemental content information may include information associated with the home page or start page, the remaining portion or entire portion of the multimedia file, the remaining portion of the questionnaire or survey, the full version of the file or the like. Consequently, a portion of the commands for effecting the retrieval of the supplemental content information are generally links, addresses or the like for locating the supplemental content information.

At step **510,** the (1) local content information and the (2) commands for effecting retrieval of supplemental content information from a remote network resource are transmitted from the transponder to a mobile device equipped with a RFID reader. Once the reader logically interprets the transmitted information, a processor within the mobile terminal will, at step **520,** provide a user of the mobile device access to the local content information. At optional step **530,** the user of the mobile device may be required to execute some form of authentication/authorization to initiate the retrieval of supplemental content information. Such authorization by the user insures that undesirable downloads to the mobile terminal are not undertaken without the user's consent. Authorization may entail a payment of a fee by the mobile terminal user in order to download the supplemental content information. Authentication may encompass providing a requisite password to download the supplemental content information, if the supplemental content information is limited to individuals who have been granted download status. If the user provides authorization for retrieval of the supplemental content information or if the application does not require authorization then, at step **540** the mobile terminal effects retrieval of the supplemental content information stored at the remote network resource based on the commands in the transponder transmission. The method may provide that steps **520** and **540** are performed concurrently, such that, while the mobile device user is provided access to the local content information the mobile device is concurrently effecting the retrieval of the supplemental content information from the network resource. Effecting retrieval of the supplemental content information from the network resource may involve establishing a wireless connection and downloading the supplemental content information from the network resource to the mobile device. By performing steps **520** and **540** simultaneously, the supplemental content information is accessed more quickly such that the local and supplemental content information may be presented seamlessly, if so desired.

At optional step **550,** once the supplemental has been downloaded to the mobile terminal the user of the mobile terminal may be required to execute some form of authentication/authorization to access the downloaded information. This authentication/authorization procedure may be in addition to the authentication/authorization process performed at step **530** or this process may be the only the only authentication/authorization process required of the user. Thus, authorization/authentication may be required prior to downloading the supplemental content information to the mobile terminal and/or after downloading the supplemental content information but before accessing the information. Authorization may entail a payment of a fee by the mobile terminal user in order to gain access to the supplemental content information. Authentication may encompass providing a requisite password, if the supplemental content information is limited to individuals who have been granted access status. If the user provides authorization/authentication for access to the supplemental content information or if the application does not require authorization/authentication at this stage then, at step **560,** the mobile terminal is provided access to the supplemental content information.

In addition, the step of effecting retrieval of the supplemental content information stored at the remote network resource may occur absent user input by the mobile device user, i.e., automatically, or the step may occur based on an input or selection by the mobile device user. Selection by the mobile device user may involve an authorization process, such as authorizing by payment of a fee. In one embodiment of the invention the mobile device user is provided complimentary access to the local content information stored on the transponder and is required to pay a fee to access the supplemental content information stored at the network resource.

It will be understood that each block or step of the flowchart in Figure 5, and combinations of blocks in the flowchart, can be implemented by computer program instructions. These computer program instructions **340** may be loaded onto a computer or other programmable apparatus, such as the processor of the mobile device **300,** to produce a machine, such that the instructions which execute on the computer or other programmable apparatus create means for implementing the functions specified in the flowchart block(s) or step(s). These computer program instructions may also be stored in a computer-readable memory **350** of the mobile device that can direct a computer or other programmable apparatus to function in a particular manner, such that the instructions stored in the computer-readable memory produce an article of manufacture including instruction means which implement the function specified in the flowchart block(s) or step(s). The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the flowchart block(s) or step(s).

Accordingly, blocks or steps of the flowcharts support combinations of means for performing the specified functions, combinations of steps for performing the specified functions and program instruction means for performing the specified functions. It will also be understood that each block or step of the flowchart, and combinations of blocks or steps in the flowchart, can be implemented by special purpose hardware-based computer systems that perform the specified functions or steps, or combinations of special purpose hardware and computer instructions.

Thus, the present invention provides for a short-range communication system, including a tag and transceiver device, which seamlessly integrates information stored on the tag with information stored at an external network resource. The system, devices and methods are capable of providing a user with access to information and services stored locally on the tag and remotely at a network resource without incurring an unnecessary delay between the presentation of the information stored on the tag and the information stored remotely. Additionally, the system, devices and methods of the present invention characteristically limit the amount of information stored on the tag, thereby, limiting the memory capacity required of the tag, the physical size of the tag and the cost of the tag, without similarly limiting the information available to the user via access to the remote network resource. Further, the systems, devices and methods of the present invention provide for information stored locally on the tag to be static in nature, while the supplemental content information stored at the network resource is easily accessible and generally dynamic, allowing for the information be provided to the user to be updated or changed as the application dictates. In addition, the system, devices and methods provide for dual mode access to information, whereby information stored on the tag is accessed freely, while information on the remote network resource requires some form of authorization.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the cope of the appended claims. Although specific terms are employed herein, they are used in a generic and descriptive sense only and not for purposes of limitation.

## Claims

1. A short-range wireless communication transponder device for providing access to content information, the device comprising:
short-range wireless communication circuitry; and
a memory unit in communication with the circuitry, wherein the memory unit stores local content information and commands for concurrently effecting retrieval of supplemental content information associated with the local content information from a remote network resource while the local content information is accessible to a remote wireless device.

2. The device of Claim 1, wherein the short-range wireless communication transponder device is further defined as a Radio Frequency Identification (RFID) transponder device.

3. The device of Claim 2, wherein the short-range wireless communication circuitry is further defined as RFID circuitry.

4. The device of Claim 1, wherein the memory unit that stores local content information further defines the local content information as including an Internet home page.

5. The device of Claim 4, wherein the memory unit that stores the commands for concurrently effecting retrieval of the supplemental content information associated with the local content information from a remote network resource further comprises a memory unit that stores the commands for concurrently effecting retrieval of the supplemental content information associated with the Internet home page.

6. The device of Claim 1, wherein the memory unit that stores local content information further defines the local content information as including a first portion of a multimedia file.

7. The device of Claim, wherein the memory unit that stores the commands for concurrently effecting retrieval of supplemental content information associated with the local content information from a remote network resource further comprises a memory unit that stores the commands for concurrently effecting retrieval of supplemental content information including a second portion of the multimedia file.

8. The device of Claim 1, wherein the memory unit that stores local content information further defines the local content information as including a first portion of a questionnaire.

9. The device of Claim 8, wherein the memory unit that stores the commands for concurrently effecting retrieval of supplemental content information associated with the local content information from a remote network resource further comprises a memory unit that stores the commands for concurrently effecting retrieval of supplemental content information including a second portion of the questionnaire.

10. The device of Claim 1, wherein the memory unit that stores local content information further defines the local content information as including a condensed version of a file.

11. The device of Claim 10, wherein the memory unit that stores the commands for concurrently effecting retrieval of supplemental content information associated with the local content information from a remote network resource further comprises a memory unit that stores the commands for concurrently effecting retrieval of supplemental content information including a full version of the file.

12. A system for short-range wireless communication for accessing content information, the system comprising:
a transponder device that stores and transmits both local content information and commands for concurrently effecting retrieval of supplemental content information from a network resource while the local content information is accessible to a remote wireless device, wherein the supplemental content information is associated with the local content information; and
a mobile device that includes a reader that decodes information received from the transponder and a processor that provides for user-access to the local content information while concurrently initiating wireless communication with the network resource for the purpose of retrieving the supplemental content information.

13. The system of Claim 12, wherein the transponder stores and transmits the local content information that includes an Internet home page and the processor of the mobile device provides user-access to the Internet home page while simultaneously initiating wireless communication with the network resource that the stores supplemental content information associated with the Internet home page.

14. The system of Claim 12, wherein the transponder stores and transmits the local content information that includes a first portion of a multimedia file and the processor of the mobile device provides user-access to the first portion of the multimedia file while simultaneously initiating wireless communication with the network resource that stores the supplemental content information including a second portion of the multimedia file.

15. The system of Claim 23, wherein the transponder stores and transmits the local content information that includes a first portion of a questionnaire and the processor of the mobile device provides user-access to the first portion of the questionnaire while simultaneously initiating wireless communication with the network resource that stores the supplemental content information including a second portion of the questionnaire.

16. The system of Claim 12, wherein the transponder stores and transmits the local content information that includes a condensed version of a file and the processor of the mobile device provides user-access to the condensed version of the file while simultaneously initiating wireless communication with the network resource that stores the supplemental content information including a full version of the file.

17. The system of Claim 12, wherein the processor of the mobile device provides user-access to the local content information while simultaneously initiating wireless communication with the network resource, wherein the wireless communication is chosen from the group consisting of cellular, Wireless Local Area Network (WLAN), and Ultra Wide Band (UWB).

18. A method for providing information to a mobile device, the method comprising the steps of:
storing, at a transponder, local content information and commands for concurrently effecting retrieval of supplemental content information stored at a remote network resource;
wirelessly transmitting, from the transponder to a mobile device equipped with a reader, the local content information and the commands for concurrently effecting retrieval of supplemental content information from a remote network resource;
providing a user of the mobile device access to the local content information; and
concurrently, effecting retrieval of the supplemental content information stored at the remote network resource based on the commands in the transponder transmission.

19. The method of Claim 18, further comprising the step of providing the user seamless access to the local content information and the retrieved supplemental content information.

20. The method of Claim 19, wherein the step of providing the user seamless access to the local content information and the retrieved supplemental content information further comprising providing the user seamless access to the local content information and the retrieved supplemental content information upon authorizing the user for access.

21. The method of Claim 19, wherein the step of providing the user seamless access to the local content information and the retrieved supplemental content information further comprising providing the user seamless access to the local content information and the retrieved supplemental content information upon authenticating the user for access.

22. The method of Claim 18, wherein the step of effecting retrieval of the supplemental content information stored at the remote network resource is further defined as occurring absent user input by the mobile device user.

23. The method of Claim 18, wherein the step of effecting retrieval of the supplemental content information stored at the remote network resource further comprises effecting retrieval of the supplemental content information stored at the remote network resource upon authorizing the user.

24. The method of Claim 18, wherein the step of providing a user of the mobile device access to the local content information further comprises providing a user of the mobile device complimentary access to the local content information.

25. The method of Claim 24, wherein the step of effecting retrieval of the supplemental content information stored at the remote network resource further comprises effecting retrieval of the supplemental content information stored at the remote network resource upon payment of a fee by the mobile device user.

26. The method of Claim 18, wherein the step of effecting retrieval of the supplemental content information stored at the remote network resource further comprises effecting retrieval of the supplemental content information stored at the remote network resource upon authenticating the user.

27. The method of Claim 18, wherein the step of storing, at a transponder, local content information and commands for effecting retrieval of supplemental content information stored at a remote network resource further comprises storing, at a RFID transponder, local content information including an Internet home page and commands for effecting retrieval of supplemental content information stored at a remote network resource, wherein the supplemental content information is related to the Internet home page.

28. The method of Claim 18, wherein the step of storing, at a transponder, local content information and commands for effecting retrieval of supplemental content information stored at a remote network resource further comprises storing, at a transponder, local content information including a first portion of a multimedia file and commands for effecting retrieval of supplemental content information stored at a remote network resource, wherein the supplemental content information includes a second portion of the multimedia file.

29. The method of Claim 18, wherein the step of storing, at a transponder, local content information and commands for effecting retrieval of supplemental content information stored at a remote network resource further comprises storing, at a transponder, local content information including a first portion of a questionnaire and commands for effecting retrieval of supplemental content information stored at a remote network resource, wherein the supplemental content information includes a second portion of the questionnaire.

30. The method of Claim 18, wherein the step of storing, at a transponder, local content information and commands for effecting retrieval of supplemental content information stored at a remote network resource further comprises storing, at a RFID transponder, local content information including a condensed version of a file and commands for effecting retrieval of supplemental content information stored at a remote network resource, wherein the supplemental content information includes a full version of the file.

31. The method of Claim 18, wherein the step of effecting retrieval of the supplemental content information stored at the remote network resource further comprises initiating wireless communication with the remote network resource to retrieve the supplemental content information, wherein the wireless communication is chosen from group consisting of cellular, Wireless Local Area Network (WLAN), and Ultra Wide Band (UWB).

32. A computer program product for providing a user of a mobile device access to content information, the computer program product comprising a computer-readable storage medium having computer-readable program code portions stored therein, the computer-readable program code portions comprising:
a first executable portion capable of providing a mobile device user access to local content information stored locally on a Radio Frequency Identification (RFID) transponder and received via a wireless interrogation by the mobile device; and
a second executable portion capable of effecting retrieval of supplemental content information stored at a remote network resource based on commands received by the mobile device via the interrogation, wherein the first and second executable portions are executed concurrently to provide the user seamless access to the local and supplemental content information.

33. The computer program product of Claim 29, wherein the second executable portion capable of effecting retrieval of supplemental content information is further defined as occurring absent user input by the mobile device user.

34. The computer program product of Claim 29, wherein the second executable portion capable of effecting retrieval of supplemental content information further comprises effecting retrieval of the supplemental content information stored at the remote network resource upon authorization of the mobile device user.

35. The computer program product of Claim 29, wherein the second executable portion capable of effecting retrieval of supplemental content information further comprises effecting retrieval of the supplemental content information stored at the remote network resource upon authentication of the mobile device user.

36. The computer program product of Claim 29, wherein the first executable portion capable of providing a mobile device user access to information stored locally on a transponder and received via an interrogation by the mobile device further comprises providing a mobile device user complimentary access to information stored locally on a transponder and received via an interrogation by the mobile device.

37. The computer program product of Claim method of Claim 33 wherein second executable portion capable of effecting retrieval of supplemental content information stored at a remote network resource based on commands received by the mobile device via the interrogation further comprises effecting retrieval of the supplemental content information stored at the remote network resource upon payment of a fee by the mobile device user.
